# EUROPÄISCHE PATENTSCHRIFT

(11) **EP 2 433 731 B1**
(45) Veröffentlichungstag und Bekanntmachung des Hinweises auf die Patenterteilung: **22.06.2016**
(21) Anmeldenummer: 11180880.4
(22) Anmeldetag: 12.09.2011
(51) Int. Cl.: B23D 45/10, B23D 59/00, B27G 19/10

(54) **Plattenaufteilanlage zum Aufteilen von plattenförmigen Werkstücken**
Board partitioning assembly for partitioning plate-shaped work pieces
Installation de répartition de plaques pour répartir des pièces en forme de plaques

(30) Priorität: 24.09.2010 DE 102010041375
(43) Veröffentlichungstag der Anmeldung: 28.03.2012
(73) Patentinhaber: HOLZMA Plattenaufteiltechnik GmbH, 75365 Calw-Holzbronn (DE)
(72) Erfinder: Blaich, Markus, 75365 Calw-Stammheim (DE); Reinauer, Josef, 72488 Sigmaringen (DE)
(74) Vertreter: DREISS Patentanwälte PartG mbB

(56) Entgegenhaltungen:
- EP-A1- 0 189 095
- EP-A1- 2 316 601
- EP-A2- 1 066 906
- DE-B3-102006 011 131

## Beschreibung

Die Erfindung betrifft eine Plattenaufteilanlage zum Aufteilen von plattenförmigen Werkstücken nach dem Oberbegriff des Anspruchs 1 und ein Verfahren zum Betrieben einer Plattenaufteilanlage gemäß dem Oberbegriff des Anspruchs 14.

Die DE 10 2006 011 131 B3 beschreibt eine Plattenaufteilanlage mit einer Hauptsäge und einer Vorritzsäge. Durch eine solche Vorritzsäge wird normalerweise eine Vorritzfuge im Bereich der unteren Oberfläche eines plattenförmigen Werkstücks eingebracht, welche jedoch das Werkstück nicht trennt. Der eigentliche Trennvorgang wird durch die Hauptsäge durchgeführt. Die Breite der Vorritzfuge ist üblicherweise etwas größer als die Breite der Trennfuge der Hauptsäge. Durch die Vorritzsäge wird vermieden, dass die Werkstückoberfläche beim eigentlichen Trennvorgang durch die Trennsäge ausreißt. Dies gilt insbesondere für Werkstücke mit einer Oberflächenbeschichtung.

Bei der Herstellung der Vorritzfuge ist es wichtig, dass diese mit der später eingebrachten Trennfuge möglichst exakt fluchtet. Daher wird in der DE 10 2006 011 131 vorgeschlagen, die Relativpositionen des Vorritzsägeblatts und des Hauptsägeblatts aufeinander abzustimmen. Hierzu kann das Vorritzsägeblatt in einer Richtung orthogonal zur Ebene des Vorritzsägeblatts verstellt werden.

EP 1 066 906 A2 beschreibt eine Plattenaufteilanlage gemäß dem Oberbegriff von Anspruch 1, bei der das Vorritzsägeblatt orthogonal zur Blattebene durch eine elektrisch betätigbare Gewindestange verstellt wird. EP 0 189 095 A1 offenbart eine Kreissäge mit einer Vorritzeinrichtung in Form von zwei zueinander einstellbaren Schneiden.

Aufgabe der vorliegenden Erfindung ist es, eine Vorrichtung zu schaffen, bei der auch bei dicken Werkstückstapeln die Vorteile der Verwendung einer Vorritzsäge genutzt werden können.

Diese Aufgabe wird durch eine Plattenaufteilanlage mit den Merkmalen des Anspruchs 1 und durch ein Verfahren mit den Merkmalen des Anspruchs 14 gelöst. Vorteilhafte Weiterbildungen der Erfindung sind in Unteransprüchen angegeben, wobei bereits hier darauf hingewiesen wird, dass die Merkmale der Unteransprüche auch selbstständig bei einer Plattenaufteilanlage mit Vorritzsäge und Hauptsäge als erfinderisch angesehen werden. Für die Erfindung wichtige Merkmale können darüber hinaus auch der nachfolgenden Beschreibung und der Zeichnung entnommen werden, wobei die Merkmale sowohl in Alleinstellung als auch in unterschiedlichen Kombinationen für die Erfindung wichtig sein können.

Die erfindungsgemäße Plattenaufteilanlage hat den Vorteil, dass ein Exzentergetriebe konstruktiv sehr einfach und selbsthemmend ist und eine präzise Justierung des Vorritzsägeblatts orthogonal zu seiner Blattebene erlaubt. Außerdem baut ein solches Exzentergetriebe sehr klein und schmal, wodurch insbesondere zu den Seiten hin kleine Abmessungen der Vorritzsäge erreicht werden.

Dies führt dazu, dass der Sägewagen das Vorritzsägeblatt bis in einen seitlich von einem Bearbeitungstisch, auf dem die aufzuteilenden Platten liegen, vorhandenen Maschinenfuß bewegen kann, wo dann das Vorritzsägeblatt durch eine entsprechende Einrichtung vertikal bewegt werden kann, um einen seitlichen Rand des Werkstückstapels, beispielsweise von Küchenarbeitsplatten, vorzuritzen. Dadurch, dass die gesamte Vorritzsäge einschließlich ihrer Verstelleinrichtung so schmal baut, findet sie für den gerade beschriebenen Anwendungsfall auch in einem schmalen Maschinenfuß ausreichend Platz, um die besagte Vertikalbewegung ausführen zu können. Dies wird auch als "vertikales Vorritzen" bezeichnet.

Eine vertikale Eingangswelle verstärkt diese Vorteile nochmals.

Eine Verstellschraube im ersten Lagerabschnitt, die die Exzenterscheibe mittelbar beaufschlagt, gestattet eine spielfreie Koppelung des ersten Lagerabschnitts an die Exzenterscheibe, erhöht also nochmals die Justiergenauigkeit.

Ein unterhalb vom zweiten Lagerabschnitt angeordneter Antriebsmotor sorgt für eine weiterhin sehr schmale Ausführung der Vorritzsäge mit den bereits oben genannten Vorteilen.

Wenn der erste Lagerabschnitt an dem zweiten Lagerabschnitt mittels mindestens einer Linearführung gelagert ist, baut die Vorrichtung besonders preiswert.

Eine Mehrzahl federelastischer Materialbrücken zur Lagerung des ersten Lagerabschnitts sorgt für Spielfreiheit und konstruktive Robustheit.

Unterschiedliche Steifigkeiten der Materialbrücken in Bewegungsrichtung des ersten Lagerabschnitts und quer hierzu sorgen für eine präzise Positionierung des ersten Lagerabschnitts.

Die Verwendung einer Verbindungsplatte zur Herstellung der Materialbrücken ist fertigungstechnisch einfach, reduziert also die Herstellkosten.

Die erfindungsgemäß vorgesehene Kontaktfläche, die an einer Führungsfläche anliegt, führt zu einer exakten seitlichen Positionierung und damit zu einem besonders guten Arbeitsergebnis.

Dies ist besonders einfach zu realisieren, wenn Kontaktfläche und Führungsfläche am ersten Lagerabschnitt beziehungsweise der Verbindungsplatte vorhanden sind.

Ein Absolutmesssystem stellt Signale bereit, die einer Steuer- und Regeleinrichtung der Plattenaufteilanlage zu jedem Zeitpunkt, auch unmittelbar nach dem Start der Plattenaufteilanlage, die aktuelle Position des Vorritzsägeblatts anzeigt. Selbst nach einem Werkzeugwechsel ist bei vorhandenen Werkzeugdaten in einer Werkzeugdatenbank eine Neujustierung von Hand daher nicht erforderlich.

Ein solches Absolutmesssystem ist durch einen Sensor, der mit einer Sensorfläche zusammenwirkt, besonders einfach und robust zu realisieren.

Nachfolgend wird eine Ausführungsform der Erfindung beispielhaft erläutert. In der Zeichnung zeigen:
- Figur 1: eine Draufsicht auf eine Plattenaufteilanlage mit einem Sägewagen mit einer Hauptsäge und einer Vorritzsäge;
- Figur 2: eine schematische Vorderansicht auf den Sägewagen von Figur 1 bei einem normalen Vorritzvorgang;
- Figur 3: eine Darstellung ähnlich Figur 2 bei einem seitlichen vertikalen Vorritzvorgang;
- Figur 4: eine Darstellung ähnlich Figur 2 bei einem normalen Sägevorgang nach dem in Figur 3 dargestellten Schritt;
- Figur 5: eine perspektivische Darstellung des Sägewagens von Figur 1 von schräg hinten;
- Figur 6: eine perspektivische Darstellung der Vorritzsäge von Figur 1 von schräg vorne;
- Figur 7: eine perspektivische Darstellung der Vorritzsäge von Figur 1 von schräg hinten;
- Figur 8: eine perspektivische Darstellung eines ersten und eines zweiten Lagerabschnitts der Vorritzsäge der Figuren 6 und 7;
- Figur 9: eine Seitenansicht der Lagerabschnitte von Figur 8;
- Figur 10: einen Schnitt längs der Linie X-X von Figur 9;
- Figur 11: einen Schnitt längs der Linie XI-XI von Figur 9;
- Figur 12: eine Vorderansicht der Lagerabschnitte von Figur 8;
- Figur 13: einen Schnitt längs der Linie XIII-XIII von Figur 12; und
- Figur 14: einen Schnitt längs der Linie XIV-XIV von Figur 12.

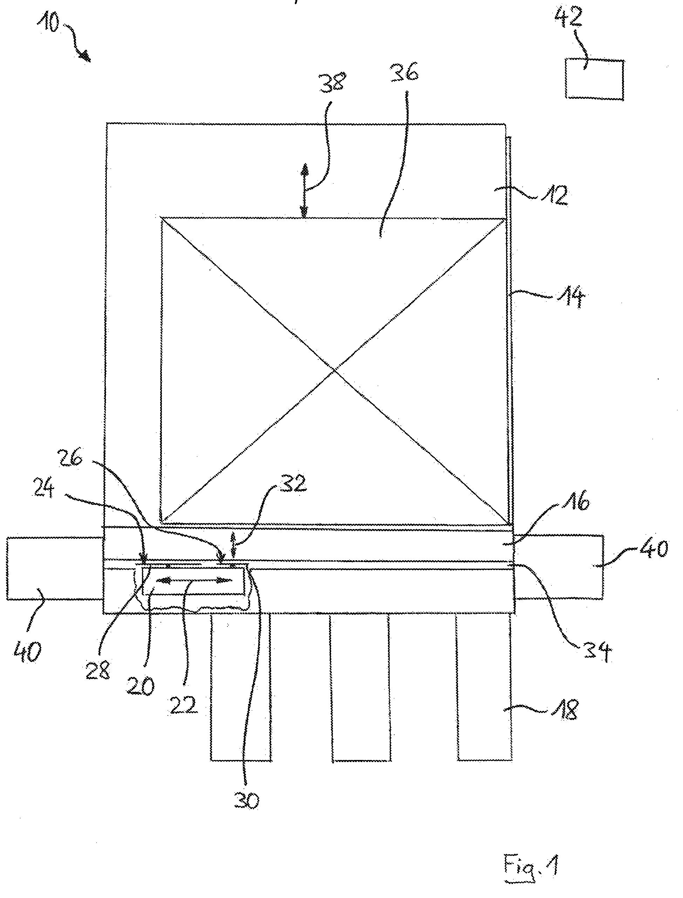

Eine Plattenaufteilanlage trägt in Figur 1 insgesamt das Bezugszeichen 10. Sie umfasst einen Zuführtisch 12, der seitlich von einem Winkellineal 14 begrenzt wird. An den Zuführtisch 12 schließt sich ein Maschinentisch 16 an, und an diesen wiederum ein dreiteiliger Entnahmetisch 18. Unterhalb des Maschinentischs 16 ist ein Sägewagen 20 auf Schienen (nicht dargestellt) beweglich gehalten (Doppelpfeil 22). Der Sägewagen 20 trägt eine Hauptsäge 24 und eine Vorritzsäge 26. Die Hauptsäge 24 umfasst wiederum ein Hauptsägeblatt 28, die Vorritzsäge 26 ein Vorritzsägeblatt 30. Die Mittelebenen von Hauptsägeblatt 28 und Vorritzsägeblatt 30 sind nach Möglichkeit fluchtend. Hierauf wird weiter unten noch stärker im Detail eingegangen. Um dies zu erreichen, ist nämlich das Vorritzsägeblatt 30 in einer Richtung orthogonal zu seiner Ebene beweglich (Doppelpfeil 32). Sowohl das Hauptsägeblatt 28 als auch das Vorritzsägeblatt 30 können auch in einer Richtung senkrecht zur Zeichnungsebene von Figur 1 bewegt werden, so dass sie durch einen Sägespalt 34 im Maschinentisch 16 nach oben über die Oberseite des Maschinentischs 16 überstehen.

In Figur 1 ist auf dem Zuführtisch ein Stapel plattenförmiger Werkstücke 36 dargestellt. Dieser kann durch eine Vorschubeinrichtung, die in Figur 1 durch einen Doppelpfeil 38 angedeutet ist, vom Zuführtisch auf den Maschinentisch 16 und weiter zum Entnahmetisch 18 gefördert werden. Die Vorschubeinrichtung 38 umfasst normalerweise einen portalartigen Programmschieber, an dem mehrere Spannzangen befestigt sind. Links und rechts vom Maschinentisch 16 sind ferner zwei säulenartige Maschinenfüße 40 dargestellt, die einerseits den Maschinentisch 16 tragen, andererseits aber nach oben über den Maschinentisch 16 überstehen, um einen in Figur 1 nicht gezeigten vertikal beweglichen Druckbalken zu halten. Ferner ist in Figur 1 noch symbolisch eine Steuer- und Regeleinrichtung 42 dargestellt, welche den Betrieb der Plattenaufteilanlage 10 steuert beziehungsweise regelt. Insbesondere die Bewegungen entsprechend den Doppelpfeilen 22, 32 und 38, die Ansteuerung der Antriebe von Hauptsäge 24 und Vorritzsäge 26, etc., werden von der Steuer- und Regeleinrichtung 42 gesteuert beziehungsweise geregelt, um den Stapel plattenförmiger Werkstücke 36 in einer gewünschten Art und Weise aufzuteilen.

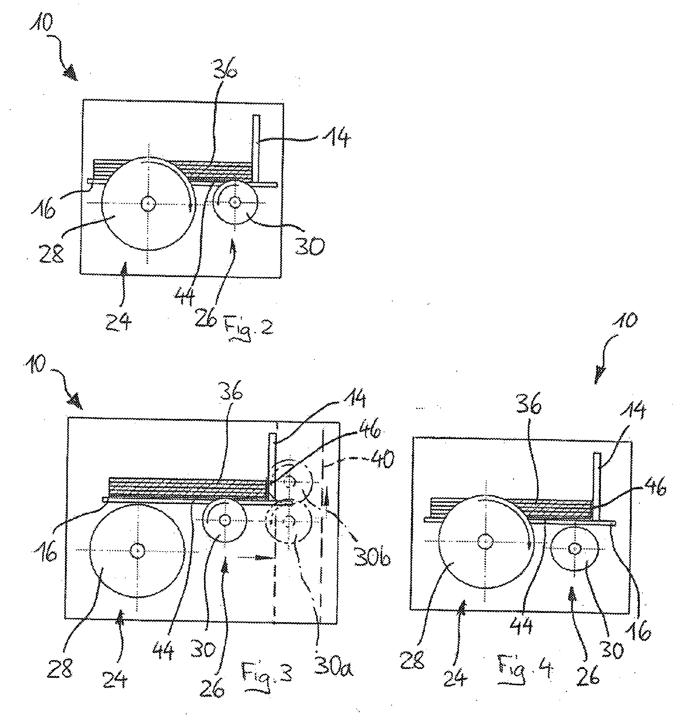

Zwei verschiedene Arten der Anwendung der Plattenaufteilanlage 10 sind in den Figuren 2 bis 4 gezeigt: Figur 2 zeigt einen herkömmlichen Betrieb der Plattenaufteilanlage 10. Bei diesem wird zunächst mit dem Vorritzsägeblatt 30 eine Vorritzfuge 44 in die Unterseite des Stapels der plattenförmigen Werkstücke 36 eingebracht und gleich anschließend wird der Werkstückstapel 36 vom Hauptsägeblatt 28 getrennt. Bei dieser Vorgehensweise besteht jedoch die Gefahr, dass beim Austritt des Hauptsägeblatts 28 am seitlichen Rand des Werkstückstapels 36 die dort vorhandene Oberflächenbeschichtung, wie sie beispielsweise bei Küchenarbeitsplatten vorhanden ist, ausreißt. Dies kann bei der Plattenaufteilanlage 10 von Figur 1 durch das in den Figuren 3 und 4 dargestellte Verfahren verhindert werden: Zunächst wird, bei abgesenktem Hauptsägeblatt 28, wieder in die Unterseite des Werkstückstapels 36 die Vorritzfuge 44 vom Vorritzsägeblatt 30 eingebracht. Der Sägewagen 20 wird dann so weit bewegt, dass das Vorritzsägeblatt 30 fast vollständig im Maschinenfuß 40 seitlich unterhalb vom Werkstückstapel 36 zu liegen kommt, wie dies durch eine strichpunktierte Position 30a des Vorritzsägeblatts 30 angedeutet ist. Dann wird das Vorritzsägeblatt 30a nach oben bewegt, wodurch eine seitliche Vorritzfuge 46 in den seitlichen Rand des Werkstückstapels 36 eingebracht wird. Die Endstellung des Vorritzsägeblattes 30 ist durch eine strichpunktierte Darstellung und das Bezugszeichen 30b angedeutet. Danach wird das Vorritzsägeblatt 30 wieder nach unten gefahren, und der Sägewagen 20 wird ganz nach links bewegt. Das Hauptsägeblatt 28 wird dann nach oben bewegt, so dass bei vollständig abgesenktem Vorritzsägeblatt 30 der Hauptsägeschnitt durchgeführt werden kann, wie in Figur 4 gezeigt.

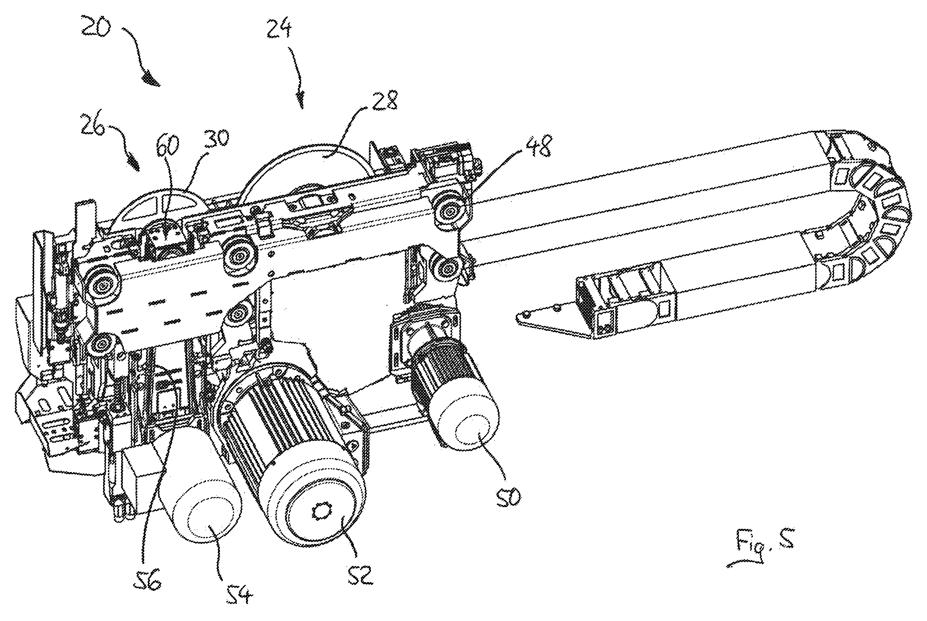

In Figur 5 ist der Sägewagen 20 stärker im Detail dargestellt. Man erkennt Rollen 48 zur Lagerung des Sägewagens 20 an den nicht gezeigten Schienen, einen Antriebsmotor 50 zur Bewegung des Sägewagens 20, einen Antriebsmotor 52, der das Hauptsägeblatt 28 antreibt, und einen Antriebsmotor 54, der über einen Riemen 56 das Vorritzsägeblatt 30 antreibt.

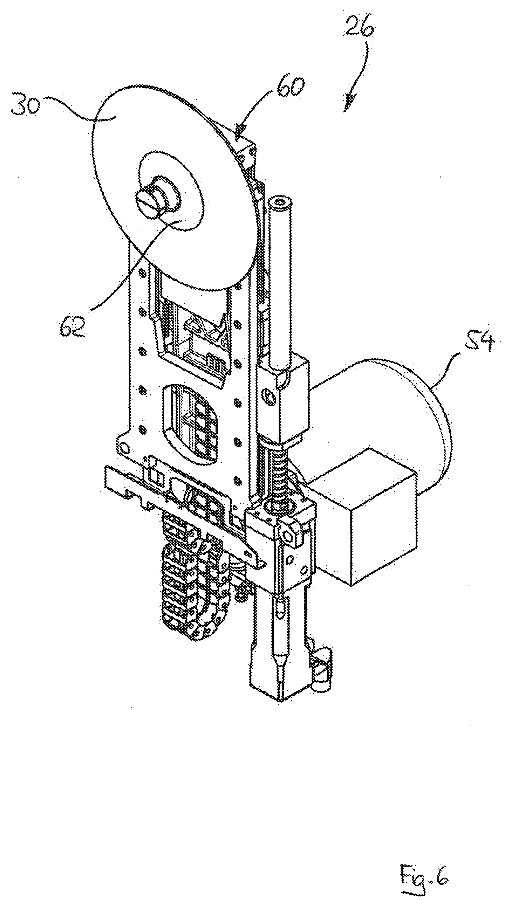

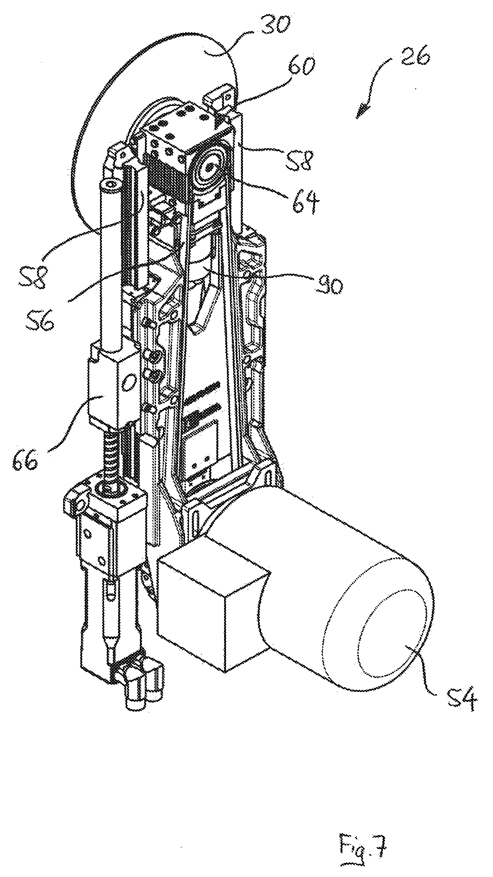

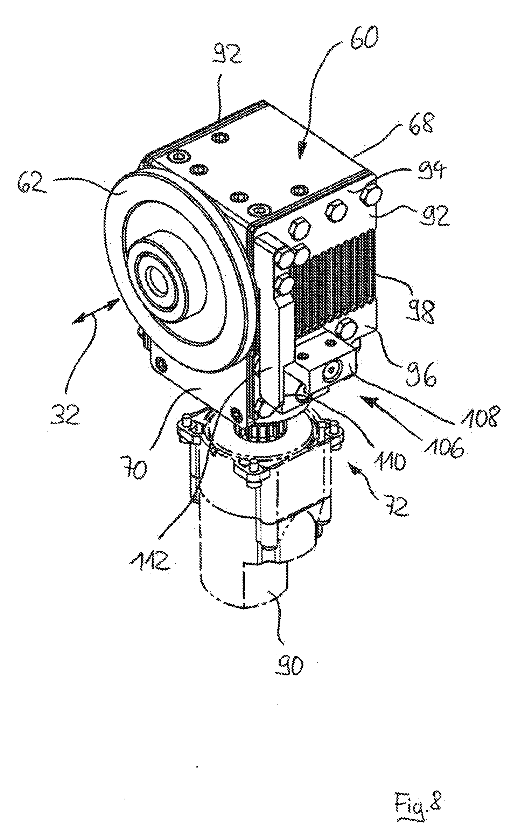

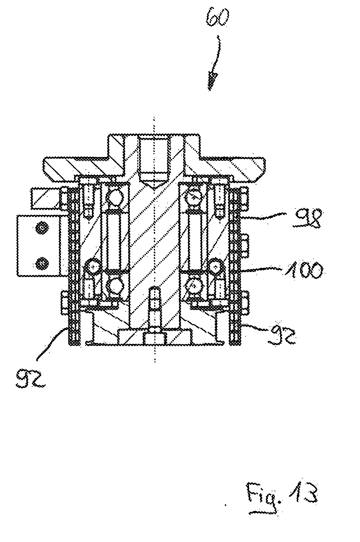

Die Figuren 6 und 7 zeigen die Vorritzsäge 26 stärker im Detail. Man erkennt Linearführungen 58, an denen ein Schlitten 60 höhenverschieblich gehalten ist. Der Schlitten 60 wird von einer in den Figuren 6 und 7 nicht gezeigten Welle durchsetzt, die am einen Ende einen Flansch 62 zur Befestigung des Vorritzsägeblatts 30 und am anderen Ende eine Riemenscheibe 64 für den Riemen 56 aufweist. Die Höhenverstellung des Schlittens 60 erfolgt mittels eines Spindelantriebs 66. Der genaue Aufbau des Schlittens 60 der Vorritzsäge 26 wird nun unter Bezugnahme auf die Figuren 8 bis 14 erläutert.

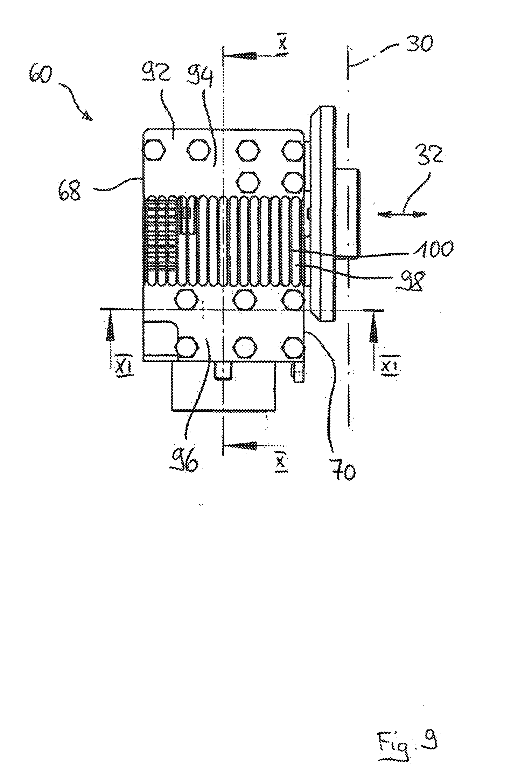

Der Schlitten 60 umfasst einen ersten Lagerabschnitt 68, an dem die Welle mit dem Flansch 62 gelagert ist, und einen zweiten Lagerabschnitt 70, an dem wiederum der erste Lagerabschnitt 68 auf noch genauer darzustellende Art und Weise gelagert ist. Dabei kann der erste Lagerabschnitt 68 in einer Richtung orthogonal zur Ebene des Vorritzsägeblatts 30 (in Figur 9 durch eine strichpunktierte Linie angedeutet) relativ zu dem zweiten Lagerabschnitt 70 bewegt werden, entsprechend dem Doppelpfeil 32 in Figur 8. Hierzu dient eine Verstelleinrichtung 72, die vorwiegend im Inneren des Schlittens 60 angeordnet und daher in den Figuren 8 und 9 kaum sichtbar ist. Die Verstelleinrichtung 72 umfasst ein Getriebe, dessen Eingangswelle 74 im Wesentlichen vertikal liegt.

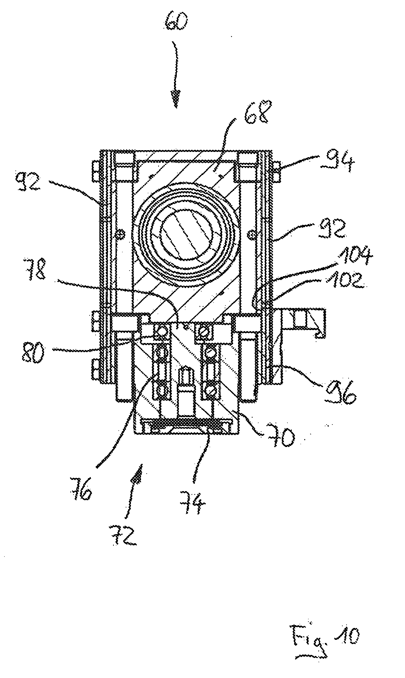

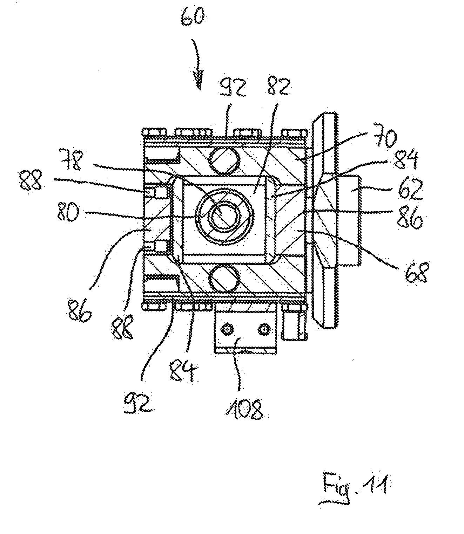

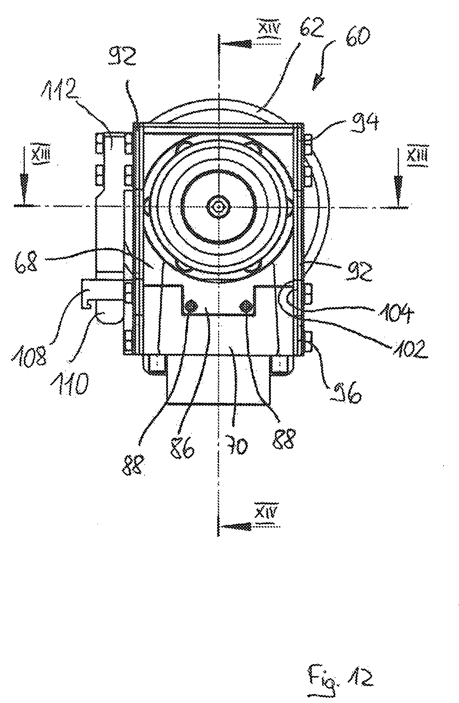

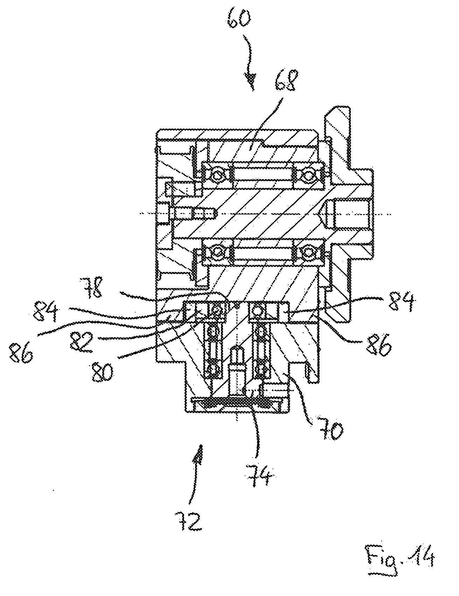

Wie beispielsweise aus Figur 10 hervorgeht, ist die Eingangswelle 74 über ringförmige Kugellager 76 am zweiten Lagerabschnitt 70 gelagert. Das in den Figuren 10 und 14 obere Ende der Eingangswelle 74 weist einen Exzenterabschnitt 78 auf, der über ein weiteres ringförmiges Kugellager 80 in einer kreisförmigen Ausnehmung eine rechteckige Außenkontur (Figur 11) aufweisenden Exzenterscheibe 82 eingreift. Über eingesetzte Passstege 84 ist die Exzenterscheibe 82 mit herunter gezogenen Abschnitten 86 des ersten Lagerabschnitts 68 gekoppelt. Die Passstege 84 können durch Verstellschrauben 88 (Figur 12), die in die herunter gezogenen Abschnitte 86 eingeschraubt sind, beaufschlagt werden, wodurch mittelbar auch die Exzenterscheibe 82 beaufschlagt und ein eventuell noch vorhandenes Spiel eliminiert wird. Aus Figur 8 ist ersichtlich, dass die Eingangswelle 74 mit einem Antriebsmotor 90 gekoppelt ist, der insoweit unterhalb vom Schlitten 60 und somit erst recht unterhalb vom zweiten Lagerabschnitt 70 angeordnet ist.

Eine Besonderheit stellt die Lagerung des ersten Lagerabschnitts 68 am zweiten Lagerabschnitt 70 dar: Diese erfolgt nämlich durch seitliche Verbindungsplatten 92, die mit einem ersten, in den Figuren oberen Randbereich 94 mit dem ersten Lagerabschnitt 68 verschraubt sind, und mit einem zweiten, in den Figuren unteren Randabschnitt 96 mit dem zweiten Lagerabschnitt 70 verschraubt sind. Der zwischen den beiden voneinander abgewandten Randbereichen 94 und 96 gelegene Bereich der Verbindungsplatten 92 ist durch eine Vielzahl von sich im Wesentlichen vertikal erstreckenden länglichen Ausnehmungen 98 geschwächt. Dabei sei an dieser Stelle darauf hingewiesen, dass jede Verbindungsplatte 92 durch mehrere, beispielsweise drei Einzelschichten gebildet wird, also sozusagen einen Sandwich bildet, wobei jede Sandwichschicht durch ein relativ dickes Stahlblech gebildet wird. Die Ausnehmungen 98 sind beispielsweise durch Laserbearbeitung oder Wasserstrahlschneiden eingebracht. Zwischen benachbarten Ausnehmungen 98 sind Materialbrücken 100 gebildet, die federelastische Eigenschaften aufweisen und in Richtung der Verstellbarkeit des ersten Lagerabschnitts 68, also in Richtung der Doppelpfeile 32 beispielsweise in Figur 8, eine deutlich geringere Steifigkeit aufweisen als in jeder orthogonalen Richtung hierzu, also beispielsweise auch in seitlicher Richtung.

Die Verbindungsplatten 92 dienen auch der exakten Führung des beweglichen ersten Lagerabschnitts 68 relativ zum zweiten Lagerabschnitt 70: Hierzu verfügt der erste Lagerabschnitt 68 auf seiner den Verbindungsplatten 92 zugewandten Außenseite über eine hochpräzise bearbeitete Kontaktfläche 102, die mit einer am zweiten Randbereich 96 der Verbindungsplatten 92 vorhandenen Führungsfläche 104 (Figur 10)gleitend zusammenarbeitet.

Die Vorritzsäge 26 umfasst ferner ein Absolutmesssystem 106, umfassend unter anderem einen Sensor 108 und eine Sensorfläche 110, die auf der dem Sensor 108 zugewandten Seite eines Endbereichs eines am ersten Lagerabschnitt 68 befestigten Stabs 112 ausgebildet ist. Der Sensor 108 ist dagegen am zweiten Lagerabschnitt 70 befestigt. Der Sensor 108 erfasst die absolute Größe des Abstandes zwischen Sensor 108 und der Sensorfläche 110 und stellt entsprechende Signale der Steuer- und Regeleinrichtung 42 bereit.

Die Verstellung des Vorritzsägeblatts 30 in Richtung des Doppelpfeils 32 geschieht folgendermaßen: Zunächst wird über das Absolutmesssystem 106 die absolute Lage der Mittelebene des Vorritzsägeblatts 30 erfasst, und in der Steuer- und Regeleinrichtung 42 wird errechnet, ob diese Lage der gewünschten Relativlage des Vorritzsägeblatts 30 zum Hauptsägeblatt 28 entspricht. Ist dies nicht der Fall, wird von der Steuer- und Regeleinrichtung 42 der Antriebsmotor 90 angesteuert, wodurch die Eingangswelle 74 um ihre in der dargestellten Einbaulage vertikale Achse gedreht wird. Hierdurch wird auch der Exzenterabschnitt 78 bewegt, was eine Bewegung der Exzenterscheibe 82 unter anderem parallel zur Richtung des Doppelpfeils 32 zur Folge hat. Diese Bewegung der Exzenterscheibe 82 wird über die Passstege 84 und die herunter gezogenen Abschnitte 86 auf den ersten Lagerabschnitt 68 übertragen, wodurch die Ebene des Vorritzsägeblatts 30 sich orthogonal zu sich selbst verschiebt. Bei der Bewegung des ersten Lagerabschnitts 68 relativ zum zweiten Lagerabschnitt 70 werden die Materialbrücken 100 zwischen den Ausnehmungen 98 in den Verbindungsplatten 92 federelastisch verbogen.

Es versteht sich an dieser Stelle, dass die erfindungsgemäßen Vorteile auch mit einer Verbindung zwischen erstem Lagerabschnitt 68 und zweitem Lagerabschnitt 70 erzielt werden können, die keine Materialbrücken 100, sondern beispielsweise eine oder mehrere Linearführungen umfassen. Auch ist anstelle eines Exzentergetriebes beispielsweise ein Schneckengetriebe oder etwas Ähnliches denkbar. Wichtig ist, dass durch die vertikale Anordnung der Eingangswelle 74 und die hierdurch mögliche Anordnung des Antriebsmotors 90 unterhalb des Schlittens 60 die gesamte Vorritzsäge 26 zur Seite hin so schmal baut, dass sie innerhalb des Maschinenfußes 40 die in Figur 3 gezeigte vertikale Bewegung ausführen kann.

## Patentansprüche

1. Plattenaufteilanlage (10) zum Aufteilen von plattenförmigen Werkstücken (36), insbesondere für die Herstellung von Möbeln, mit einem Sägewagen (20), der längs einer Sägelinie für einen Sägeschnitt bewegbar ist, einer an dem Sägewagen (20) angeordneten Vorritzsäge (26) und einer an dem Sägewagen (20) angeordneten Hauptsäge (24), wobei die Vorritzsäge (26) einen ersten Lagerabschnitt (68), an dem mindestens mittelbar ein Vorritzsägeblatt (30) gelagert ist, und einen zweiten Lagerabschnitt (70), an dem der erste Lagerabschnitt (68) gelagert ist, umfasst, wobei der erste Lagerabschnitt (68) in einer Richtung mindestens auch orthogonal zur Ebene des Vorritzsägeblatts (30) relativ zu dem zweiten Lagerabschnitt (70) mittels einer Verstelleinrichtung (72) beweglich ist, die eine Eingangswelle (74) umfasst, die am einen, vorzugsweise dem zweiten Lagerabschnitt (70) gelagert ist, **dadurch gekennzeichnet, dass** die Eingängswelle (74) einen Exzenterabschnitt (78) umfasst, der in eine Exzenterscheibe (82) eingreift, die mit dem anderen, vorzugsweise dem ersten Lagerabschnitt (68) gekoppelt ist.

2. Plattenaufteilanlage (10) nach Anspruch 1, **dadurch gekennzeichnet, dass** die Eingangswelle (74) im Wesentlichen vertikal liegt.

3. Plattenaufteilanlage (10) nach Anspruch 2, **dadurch gekennzeichnet, dass** in den anderen Lagerabschnitt (68) eine Verstellschraube (88) eingeschraubt ist, welche mindestens mittelbar die Exzenterscheibe (82) beaufschlagt.

4. Plattenaufteilanlage (10) nach einem der vorhergehenden Ansprüche, **dadurch gekennzeichnet, dass** die Eingangswelle (74) mit einem Antriebsmotor (90) gekoppelt ist, der unterhalb von dem zweiten Lagerabschnitt (70) angeordnet ist.

5. Plattenaufteilanlage (10) nach einem der vorhergehenden Ansprüche, **dadurch gekennzeichnet, dass** der erste Lagerabschnitt (68) an dem zweiten Lagerabschnitt (70) mittels mindestens einer Linearführung gelagert ist.

6. Plattenaufteilanlage (10) nach einem der vorhergehenden Ansprüche, **dadurch gekennzeichnet, dass** der erste Lagerabschnitt (68) an dem zweiten Lagerabschnitt (70) mittels einer Mehrzahl federelastischer Materialbrücken (100) beweglich gelagert ist.

7. Plattenaufteilanlage (10) nach Anspruch 6, **dadurch gekennzeichnet, dass** die Materialbrücken (100) in Bewegungsrichtung (32) des ersten Lagerabschnitts (68) eine um ein Mehrfaches geringere Steifigkeit aufweisen als quer zur Bewegungsrichtung (32).

8. Plattenaufteilanlage (10) nach einem der Ansprüche 6 oder 7, **dadurch gekennzeichnet, dass** die Materialbrücken (100) zwischen benachbarten, länglichen und sich im Wesentlichen vertikal erstreckenden Ausnehmungen (98) in einer im Wesentlichen vertikalen Verbindungsplatte (92) gebildet sind, welche mit einem ersten Randbereich (94) am ersten Lagerabschnitt (68) und mit einem zweiten Randbereich (96), der vom ersten abgewandt ist, am zweiten Lagerabschnitt (70) befestigt ist, wobei sich die Ausnehmungen (98) wenigstens in etwa vom ersten Randbereich (94) zum zweiten Randbereich (96) erstrecken.

9. Plattenaufteilanlage (10) nach einem der vorhergehenden Ansprüche, **dadurch gekennzeichnet, dass** der erste Lageranschnitt (68) mit einer wenigstens in etwa vertikalen Kontaktfläche (102) starr verbunden ist oder diese aufweist, die an einer wenigstens in etwa vertikalen Führungsfläche (104) anliegt, welche mit dem zweiten Lagerabschnitt (70) starr verbunden ist.

10. Plattenaufteilanlage (10) nach den Ansprüchen 8 und 9, **dadurch gekennzeichnet, dass** die Kontaktfläche (102) am ersten Lagerabschnitt (68) und die Führungsfläche (104) am zweiten Randbereich (96) der Verbindungsplatte (92) vorhanden sind.

11. Plattenaufteilanlage (10) nach einem der vorhergehenden Ansprüche, **dadurch gekennzeichnet, dass** die Vorritzsäge (26) ein Absolutmesssystem (106) umfasst, welches die Relativposition vom ersten zum zweiten Lagerabschnitt (68, 70) erfasst und einer Steuer- und Regeleinrichtung (42) entsprechende Signale bereitstellt.

12. Plattenaufteilanlage (10) nach Anspruch 11, **dadurch gekennzeichnet, dass** das Absolutmesssystem (106) einen mit dem einen Lagerabschnitt (70) gekoppelten Sensor (108) und eine mit dem anderen Lagerabschnitt (68) gekoppelte Sensorfläche (110) aufweist, wobei der Sensor (108) mit der Sensorfläche (110) zusammenwirkt.

13. Plattenaufteilanlage (10) nach einem der vorhergehenden Ansprüche, **dadurch gekennzeichnet, dass** erster und zweiter Lagerabschnitt (68, 70), Eingangswelle (74) und Antriebsmotor (90) so angeordnet und dimensioniert sind, dass sie in einem Maschinenfuß (40) aufgenommen werden können.

14. Verfahren zum Betreiben einer Plattenaufteilanlage (10)nach einem der vorhergehenden Ansprüche, mit einem Sägewagen (20), der längs einer Sägelinie für einen Sägeschnitt bewegbar ist, einer an dem Sägewagen (20) angeordneten Vorritzsäge (26) und einer an dem Sägewagen (20) angeordneten Hauptsäge (24), **dadurch gekennzeichnet, dass** ein Trennschnitt mit der Hauptsäge (24) erst durchgeführt wird, nachdem ein Vorritz-Bearbeitungsschritt unter Verwendung der Vorritzsäge (26), einschließlich eines vertikalen Vorritzens, durchgeführt worden ist.

## Claims

1. A panel sizing system (10) for sizing panel-like workpieces (36), in particular for producing furniture, having a saw carriage (20) that is movable along a sawing line for a saw cut, a scoring saw (26) located on the saw carriage (20), and a main saw (24) located on the saw carriage (20), wherein the scoring saw (26) includes a first bearing portion (68), on which a scoring saw blade (30) is at least indirectly supported, and a second bearing portion (70), on which the first bearing portion (68) is supported, and wherein by means of an adjusting device (72) that includes an input shaft (74) that is supported on one bearing portion, preferably the second bearing portion (70), the first bearing portion (68) is movable relative to the second bearing portion (70) in a direction that is at least also orthogonal to the plane of the scoring saw blade (30), **characterized in that** the input shaft (74) includes an eccentric portion (78), which engages an eccentric disc (82) that is coupled to the other, preferably the first, bearing portion (68).

2. The panel sizing system (10) of claim 1, **characterized in that** the input shaft (74) lies essentially vertically.

3. The panel sizing system (10) of claim 2, **characterized in that** an adjusting screw (88) is screwed into the other bearing portion (68), which screw acts at least indirectly on the eccentric disc (82).

4. The panel sizing system (10) of one of the foregoing claims, **characterized in that** the input shaft (74) is coupled to a drive motor (90) that is located below the second bearing portion (70).

5. The panel sizing system (10) of one of the foregoing claims, **characterized in that** the first bearing portion (68) is supported on the second bearing portion (70) by means of at least one linear guide.

6. The panel sizing system (10) of one of the foregoing claims, **characterized in that** the first bearing portion (68) is supported movably on the second bearing portion (70) by means of a plurality of spring-elastic bridges of material.

7. The panel sizing system (10) of claim 6, **characterized in that** in the direction of motion (32) of the first bearing portion (68), the bridges of material (100) have a rigidity that is multiple times less than tranversely to the direction of motion (32).

8. The panel sizing system (10) of one of claims 6 or 7, **characterized in that** the bridges of material (100) are formed between adjacent, elongated and substantially vertically extending recesses (98) in a substantially vertical connecting panel (92), which panel is secured by a first peripheral region (94) to the first bearing portion (68) and by a second peripheral region (96), which faces away from the first, to the second bearing portion (70), and the recesses (98) extend at least approximately from the first peripheral region (94) to the second peripheral region (96).

9. The panel sizing system (10) of one of the foregoing claims, **characterized in that** the first bearing portion (68) is rigidly joined to, or has, an at least approximately vertical contact face (102), which rests on an at least approximately vertical guide face (104) that is rigidly joined to the second bearing portion (70).

10. The panel sizing system (10) of claims 8 and 9, **characterized in that** the contact face (102) is located on the first bearing portion (68), and the guide face (104) is located on the second peripheral region (96) of the connecting panel (92).

11. The panel sizing system (10) of one of the foregoing claims, **characterized in that** the scoring saw (26) includes an absolute measurement system (106), which detects the relative position of the first to the second bearing portion (68, 70) and furnishes signals accordingly to a control and regulating device (42).

12. The panel sizing system (10) of claim 11, **characterized in that** the absolute measurement system (106) has a sensor (108) coupled to the one bearing portion (70) and a sensor face (110) coupled to the other bearing portion (68), and the sensor (108) cooperates with the sensor face (110).

13. The panel sizing system (10) of one of the foregoing claims, **characterized in that** the first and second bearing portions (68, 70), the input shaft (74), and the drive motor (70) are located and dimensioned in such a way that they can be received in a machine base (40).

14. A method for operating a panel sizing system (10) of one of the foregoing claims, having a saw carriage (20) that is movable along a sawing line for a saw cut, a scoring saw (26) located on the saw carriage (20), and a main saw (24) located on the saw carriage (20), **characterized in that** a separating cut is not made by the main saw (24) until after a scoring machining step, including vertical scoring, has been made using the scoring saw (26).

## Revendications

1. Installation à diviser des panneaux (10) destinée à diviser des pièces (36) en forme de panneau, en particulier pour la fabrication de meubles, comprenant un chariot de scie (20) qui est déplaçable le long d'une ligne de sciage pour une coupe de scie, une scie inciseur (26) disposée sur le chariot de scie (20) et une scie principale (24) disposée sur le chariot de scie (20), ladite scie inciseur (26) comprenant une première section formant palier (68) sur laquelle est logée, au moins indirectement, une lame de scie inciseur (30), et une deuxième section formant palier (70) sur laquelle est logée la première section formant palier (68), ladite première section formant palier (68) étant déplaçable par rapport à la deuxième section formant palier (70) dans une direction au moins également orthogonale au plan de la lame de scie inciseur (30), par l'intermédiaire d'un dispositif de réglage (72) qui comprend un arbre d'entrée (74) lequel est logé sur une, de préférence sur la deuxième section formant palier (70), **caractérisée par le fait que** ledit arbre d'entrée (74) comprend une section excentrique (78) qui se prend dans un disque excentrique (82) qui est couplé à l'autre, de préférence à la première section formant palier (68).

2. Installation à diviser des panneaux (10) selon la revendication 1, **caractérisée par le fait que** ledit arbre d'entrée (74) est situé pour l'essentiel verticalement.

3. Installation à diviser des panneaux (10) selon la revendication 2, **caractérisée par le fait qu'**une vis de réglage (88) est vissée dans l'autre section formant palier (68), qui agit au moins indirectement sur le disque excentrique (82).

4. Installation à diviser des panneaux (10) selon l'une quelconque des revendications précédentes, **caractérisée par le fait que** l'arbre d'entrée (74) est couplé à un moteur d'entraînement (90) qui est disposé au-dessous de la deuxième section formant palier (70).

5. Installation à diviser des panneaux (10) selon l'une quelconque des revendications précédentes, **caractérisée par le fait que** la première section formant palier (68) est logée au moyen d'au moins un guidage linéaire sur la deuxième section formant palier (70).

6. Installation à diviser des panneaux (10) selon l'une quelconque des revendications précédentes, **caractérisée par le fait que** la première section formant palier (68) est logée de manière mobile, au moyen d'une pluralité de ponts de matériau (100) à élasticité de ressort, sur la deuxième section formant palier (70).

7. Installation à diviser des panneaux (10) selon la revendication 6, **caractérisée par le fait que** les ponts de matériau (100) présentent, dans la direction de mouvement (32) de la première section formant palier (68), une rigidité qui est plus petite d'un multiple que transversalement à la direction de mouvement (32).

8. Installation à diviser des panneaux (10) selon l'une quelconque des revendications 6 ou 7, **caractérisée par le fait que** les ponts de matériau (100) sont formés entre des évidements (98) voisins, allongés et s'étendant pour l'essentiel verticalement, dans une plaque de jonction (92) pour l'essentiel verticale qui est fixée par une première zone marginale (94) sur la première section formant palier (68) et par une deuxième zone marginale (96) qui est opposée à la première, sur la deuxième section formant palier (70), lesdits évidements (98) s'étendant au moins à peu près depuis la première zone marginale (94) vers la deuxième zone marginale (96).

9. Installation à diviser des panneaux (10) selon l'une quelconque des revendications précédentes, **caractérisée par le fait que** la première section formant palier (68) est reliée de manière rigide à une surface de contact (102) au moins à peu près verticale ou présente celle-ci qui s'applique contre une surface de guidage (104) au moins à peu près verticale laquelle est reliée de manière rigide à la deuxième section formant palier (70).

10. Installation à diviser des panneaux (10) selon les revendications 8 et 9, **caractérisée par le fait que** la surface de contact (102) est présente sur la première section formant palier (68) et la surface de guidage (104) est présente sur la deuxième zone marginale (96) de la plaque de jonction (92).

11. Installation à diviser des panneaux (10) selon l'une quelconque des revendications précédentes, **caractérisée par le fait que** la scie inciseur (26) comprend un système de mesure absolue (106) qui détecte la position relative de la première par rapport à la deuxième section formant palier (68, 70) et fournit des signaux correspondants à un dispositif de commande et d'asservissement (42).

12. Installation à diviser des panneaux (10) selon la revendication 11, **caractérisée par le fait que** ledit système de mesure absolue (106) présente un capteur (108) couplé à l'une (70) des sections formant palier ainsi qu'une surface détectrice (110) couplée à l'autre section formant palier (68), le capteur (108) coopérant avec la surface détectrice (110).

13. Installation à diviser des panneaux (10) selon l'une quelconque des revendications précédentes, **caractérisée par le fait que** les première et deuxième sections formant palier (68, 70), ledit arbre d'entrée (74) et ledit moteur d'entraînement (90) sont disposés et dimensionnés de manière à ce qu'ils puissent être reçus dans un socle de machine (40).

14. Procédé pour faire fonctionner une installation à diviser des panneaux (10) selon l'une quelconque des revendications précédentes, comprenant un chariot de scie (20) qui est déplaçable le long d'une ligne de sciage pour une coupe de scie, une scie inciseur (26) disposée sur le chariot de scie (20) et une scie principale (24) disposée sur le chariot de scie (20), **caractérisé par le fait qu'**une coupe de séparation n'est effectuée avec ladite scie principale (24) qu'après qu'une étape d'usinage par incision a été mise en oeuvre en utilisant ladite scie inciseur (26), y compris une incision verticale.
